# EUROPEAN PATENT APPLICATION

(11) **EP 2 079 123 A1**
(43) Date of publication of application: **15.07.2009**
(21) Application number: 07827906.4
(22) Date of filing: 17.10.2007
(51) Int. Cl.: H01M 8/04

(54) **FUEL CARTRIDGE FOR FUEL CELL AND NOZZLE ATTACHMENT FOR FUEL CARTRIDGE**

(30) Priority: 25.10.2006 JP 2006289885
(71) Applicant: Kabushiki Kaisha Toshiba, Minato-ku Tokyo 105-8001 (JP); Toyo Seikan Kaisha, Ltd., Tokyo 100-8522 (JP)
(72) Inventor: TAKAHASHI, Kenichi, Tokyo 105-8001 (JP); KAWAMURA, Koichi, Tokyo 105-8001 (JP); YOSHIHIRO, Kenji, Yokohama-shi Kanagawa 230-0001 (JP); YAMAMORI, You, Yokohama-shi Kanagawa 230-0001 (JP)
(74) Representative: Henkel, Feiler & Hänzel
(86) International application number: PCT/JP2007/001127
(87) International publication number: WO 2008/050474

(57) **Abstract**

A fuel cartridge (6) for a fuel cell is provided with a cartridge body (7) for storing a liquid fuel for the fuel cell. The cartridge body (7) is provided with a nozzle section (8) which has therein a valve mechanism configured of a valve body (13) and the like. A nozzle attachment (9) having a nozzle inserting portion (21) to be connected to the fuel cell is removably attached to the outer circumference side of the nozzle section (8).

## Description

### Technical Field

The present invention relates to a fuel cartridge for a fuel cell and a nozzle attachment for a fuel cartridge used for it.

### Background Art

Attempts have been made to use a fuel cell as a power source or a charger for portable electronic equipment such as a notebook computer, a cellular phone and the like to make it possible to use them for a long time without recharging. The fuel cell has characteristics that electricity can be generated by merely supplying a fuel and air and generated continuously for a long time by replenishing the fuel. Therefore, if the fuel cell can be made compact, it is a very advantageous system as a power source or a charger for portable electronic equipment.

A direct methanol fuel cell (DMFC) using a methanol fuel having a high energy density is promising as a power source or the like for portable appliances because it can be made compact and its fuel can also be handled with ease. As a method of supplying the liquid fuel of the DMFC, there are known an active method such as a gas supply type, a liquid supply type or the like and a passive method such as an inside vaporization type or the like which supplies the liquid fuel from a fuel storing section to a fuel electrode by vaporizing in the cell. The passive method is advantageous for miniaturization of the DMFC.

A passive type DMFC of an internal vaporization type or the like vaporizes the liquid fuel stored in the fuel storing section via a fuel-impregnated layer, a fuel vaporization layer or the like to supply the vaporized component of the liquid fuel to a fuel electrode (see Patent References 1 and 2). The liquid fuel is supplied to the fuel storing section by means of a fuel cartridge. For a satellite type (external injection type) fuel cartridge, a coupler provided with a nozzle section and a socket section each having a valve mechanism therein is used to stop and inject the liquid fuel (see Patent Reference 3).

To mount on, for example, portable electronic equipment, the passive type DMFC such an internal vaporization type is now under downsizing. As a result, a nozzle section (a fuel discharge portion) on the fuel cartridge side also has a tendency to be formed to have a small diameter. When this nozzle section is used to inject the liquid fuel from the fuel cartridge into the fuel storing section of the DMFC or the like, the small-diametered nozzle section might be broken if a force of bending, twisting or the like is applied to the fuel cartridge. Since the fuel cartridge stops the liquid fuel by the valve mechanism housed in the nozzle section, the liquid fuel stored in the fuel cartridge might leak if the nozzle section is broken.
Patent Reference 1: JP-B2 3413111 (Patent registration)
Patent Reference 2: WO 2005/112172 Al
Patent Reference 3: JP-A 2004-127824 (KOKAI)

### Disclosure of the Invention

According to an aspect of the present invention, there are provided a fuel cartridge for a fuel cell which enables to suppress the occurrence of a failure due to a breakage of a nozzle section of the fuel cartridge and a nozzle attachment for a fuel cartridge to be used for it.

A fuel cartridge for a fuel cell according to the present invention comprises a cartridge body for storing a liquid fuel for the fuel cell, a nozzle section which is mounted on the cartridge body and has a valve mechanism therein, and a nozzle attachment which is removably attached to the nozzle section and has a nozzle inserting portion to be connected to the fuel cell.

A nozzle attachment for a fuel cartridge according to the present invention comprises a nozzle head which is attached to a nozzle section of a fuel cartridge for a fuel cell, a nozzle inserting portion which is formed on the tip end of the nozzle head and connected to the fuel cell, and an attachment-side valve stem which is disposed within the nozzle head, wherein the attachment is removably attached to the nozzle section of the fuel cartridge.

### Brief Description of Drawings

[Fig. 1] Fig. 1 is a diagram showing a structure of a fuel cartridge for a fuel cell according to an embodiment of the invention and a fuel cell applying it.
[Fig. 2] Fig. 2 is an assembly diagram showing a structure of a nozzle section and a nozzle attachment of the fuel cartridge shown in Fig. 1.
[Fig. 3] Fig. 3 is a sectional view showing a structure of a nozzle section and a nozzle attachment of the fuel cartridge shown in Fig. 1.
[Fig. 4] Fig. 4 is a sectional view showing a modified example of the nozzle section and the nozzle attachment shown in Fig. 3.
[Fig. 5] Fig. 5 is a sectional view showing a state that the nozzle attachment is separated from the nozzle section of the fuel cartridge shown in Fig. 3.
[Fig. 6] Fig. 6 is a sectional view showing a state before the fuel cartridge and the fuel cell shown in Fig. 1 are connected.
[Fig. 7] Fig. 7 is a sectional view showing a state after the fuel cartridge and the fuel cell shown in Fig. 1 are connected.
[Fig. 8] Fig. 8 is a sectional view showing a structure of an internal vaporization type DMFC as an example of the fuel cell shown in Fig. 1.

### Explanation of Numerals

1... Fuel cell, 2... power generation section, 3... fuel storing section, 4... socket section, 6... fuel cartridge, 7... cartridge body, 8... nozzle section, 9... nozzle attachment, 11... valve holder, 12... nozzle holder, 13... valve body, 14... valve head, 15... body-side valve stem, 19... nozzle head, 20... base section, 21... nozzle inserting portion, 22... ring-shaped packing, 25... attachment-side valve stem, 26... key portion, 27... key groove, 28... pull-out projection, 29... mechanical key.

### Best Mode for Carrying out the Invention

Modes of conducting the present invention will be described below with reference to the drawings. Embodiments of the present invention are described with reference to the drawings, which are provided for illustration only, and the present invention is not limited to the drawings.

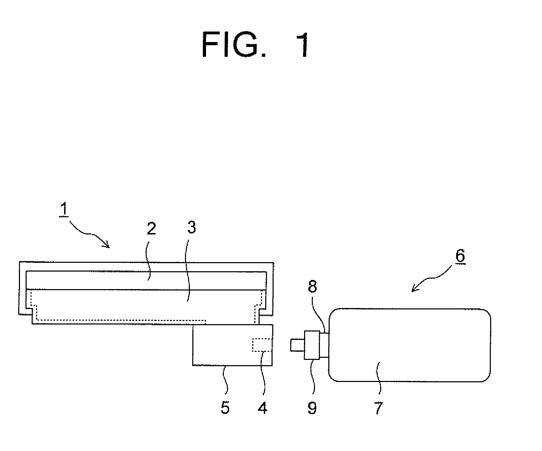

Fig. 1 is a diagram showing a structure of a fuel cartridge for a fuel cell according to an embodiment of the present invention and a fuel cell applying it. A fuel cell 1 shown in Fig. 1 is provided with a power generation section 2 and a fuel storing section 3. A fuel supply portion 5 which has a socket section 4 and becomes a fuel receiving portion is provided on the under surface of the fuel storing section 3. The socket section 4 has a valve mechanism therein as described later and is in a closed state except when the liquid fuel is supplied. The fuel cell 1 may have a structure that the liquid fuel is supplied directly from the fuel supply portion 5 to the power generation section 2 without through the fuel storing section 3.

A fuel cartridge 6 has a cartridge body (container) 7 for storing the liquid fuel for the fuel cell. A nozzle 8, which is a fuel discharge portion to supply the liquid fuel from the cartridge body 7 to the fuel storing section 3 of the fuel cell 1, and a nozzle attachment 9 are attached to a tip end of the cartridge body 7. The nozzle attachment 9 configures a connecting portion to the fuel cell 1 and attached to the nozzle section 8. The nozzle 8 has a valve mechanism therein as described in detail later which is in a closed state except when the liquid fuel is supplied to the fuel cell 1.

The fuel cartridge 6 is a so-called satellite type (external injection type) fuel cartridge and connected to the fuel cell 1 only when the liquid fuel is injected into the fuel storing section 3. The cartridge body 7 of the fuel cartridge 6 stores the liquid fuel, for example, a methanol fuel such as an aqueous methanol solution having various concentrations, pure methanol or the like for a direct methanol fuel cell (DMFC) suitable for the fuel cell 1.

The liquid fuel stored in the cartridge body 7 is not necessarily limited to the methanol fuel but may be another liquid fuel, for example, an ethanol fuel such as an aqueous ethanol solution or pure ethanol, a propanol fuel such as an aqueous propanol solution or pure propanol, a glycol fuel such as an aqueous glycol solution or pure glycol, dimethyl ether, formic acid, or the like. At any event, the cartridge body 7 stores a liquid fuel suitable for the fuel cell 1.

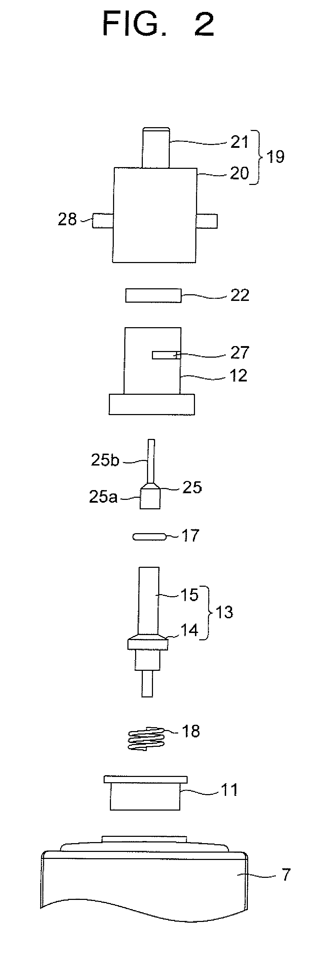

The nozzle section 8 and the nozzle attachment 9 attached to the cartridge body 7 of the fuel cartridge 6 have a structure corresponding to the socket section 4 mounted on the fuel storing section 3 of the fuel cell 1, and they configure a pair of connection mechanisms (coupler). Specific structures of the nozzle section 8 and the nozzle attachment 9 attached to the cartridge body 7 of the fuel cartridge 6 are described below with reference to Fig. 2 through Fig. 5.

As described above, the nozzle section 8 is attached to a tip end of the cartridge body 7, and the nozzle attachment 9 is attached to the exterior of the nozzle section 8. The nozzle attachment 9 is removably attached to the nozzle section 8 as described later. The nozzle section 8 has a cup-like valve holder 11 which is fixed to a fuel discharge port 10 of the cartridge body 7. A communication hole 11a which is a liquid fuel passage is formed in the bottom of the valve holder 11, and the valve holder 11 is communicated with the cartridge body 7 through the communication hole 11a.

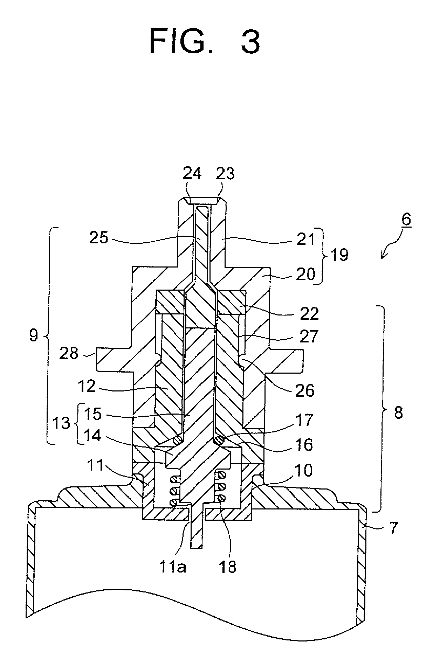

A substantially cylindrical nozzle holder 12 is mounted on the valve holder 11 as shown in Fig. 2 and Fig. 3. An open face of the valve holder 11 is covered with the nozzle holder 12 to define the valve chamber. A valve body 13 is disposed within the valve chamber. The valve body 13 is provided with a valve head 14 and a body-side valve stem 15. The valve head 14 is disposed within the valve chamber defined by the valve holder 11 and the nozzle holder 12. The body-side valve stem 15 is housed in the nozzle holder 12.

The body-side valve stem 15 is disposed to position its tip end within the nozzle holder 12. When the body-side valve stem 15 is disposed within the nozzle holder 12, the tip end of the body-side valve stem 15 retracts from the tip end surface toward the inside of the nozzle holder 12 so that a tip end of the nozzle holder 12 has a recessed shape. Thus, when the nozzle attachment 9 is separated from the nozzle section 8, the tip end of the body-side valve stem 15 protrudes from the nozzle holder 12 to prevent an occurrence of malfunction or the like.

The valve body 13 is movable back and forth in the axial direction. An O-ring 17 is disposed between the valve head 14 and a valve seat 16 which is formed within the nozzle holder 12. A force for pressing the valve head 14 to the valve seat 16 by an elastic body such as a compression spring 18 or the like is applied to the valve body 13 to press the O-ring 17. When the fuel cartridge 6 is in a state separated from the fuel cell 1, the O-ring 17 is pressed to the valve seat 16 via the valve head 14. Thus, the fuel passage in the nozzle section 8 is put in a closed state. When the fuel cartridge 6 is connected to the fuel cell 1, the fuel passage in the nozzle section 8 is put in an open state as described in detail later.

The nozzle attachment 9 is removably attached to the exterior of the nozzle holder 12 of the nozzle section 8. The nozzle attachment 9 functions as a connecting portion to the socket section 4 on the fuel cell 1 side and is provided with a nozzle head 19 which is removably attached to the exterior of the nozzle holder 12. The nozzle head 19 has a base section 20 attached to the nozzle holder 12 and a nozzle inserting portion 21 which is connected by inserting into the socket section 4 on the fuel cell 1 side. The cylindrical nozzle inserting portion 21 is formed to protrude from the base section 20 so that its axial direction becomes parallel with the insertion direction of the nozzle attachment 9.

A ring-shaped packing 22 which seals the fuel passage and its periphery is interposed between the nozzle holder 12 and the nozzle head 19. In addition, a recessed portion 23 is formed in a top surface of the nozzle inserting portion 21 of the nozzle head 19. The recessed portion 23 is formed by concaving the top surface of the nozzle inserting portion 21, and a nozzle opening 24 is formed in the bottom surface of the recessed portion 23. The recessed portion 23 functions as a storing portion for the liquid fuel remaining (adhering) on the tip end of the nozzle attachment 9. Thus, an operator is free from directly touching the liquid fuel remaining at the tip end of the nozzle attachment 9, and the safety of the fuel cartridge 6 can be enhanced furthermore.

An attachment-side valve stem 25 is disposed within the nozzle head 19. The attachment-side valve stem 25 has a large-diameter portion 25a and a small-diameter portion 25b, and the large-diameter portion 25a is disposed on and in contact with a body-side valve stem 14. The small-diameter portion 25b of the attachment-side valve stem 25 is disposed in the nozzle inserting portion 21 of the nozzle head 19 and functions as a movable system of the valve body 13 when connected by inserting into the socket section 4 of the fuel cell 1 side. The attachment-side valve stem 25 is determined that the diameter of the large-diameter portion 25a is larger than the inner diameter of the nozzle inserting portion 21. Thus, it is prevented from dropping from the nozzle head 19.

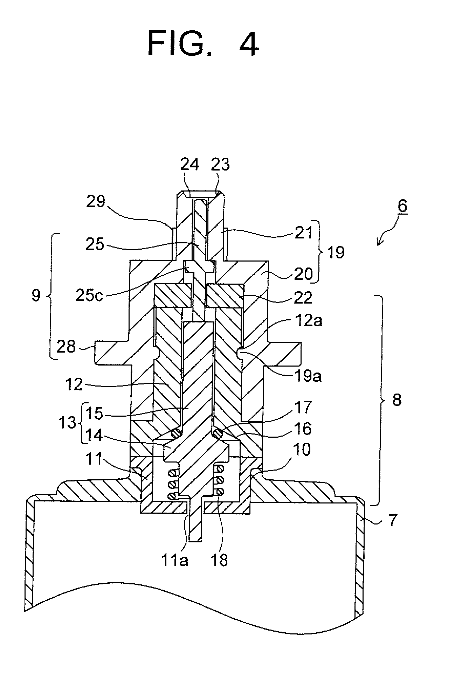

As shown in Fig. 4, a drop preventing mechanism for the attachment-side valve stem 25 may have a structure that a projection 25c having a diameter larger than the inner diameter of the nozzle inserting portion 21 is disposed at a position on the side of the nozzle opening 24 from a portion of the valve stem 25 which is contacted to the ring-shaped packing 22. The drop preventing mechanism for the valve stem 25 can be provided on at least one of the nozzle attachment 9 and the attachment-side valve stem 25.

The nozzle attachment 9 is provided with the nozzle head 19 and the attachment-side valve stem 25 as described above. To attach the nozzle attachment 9 to the nozzle section 8, the attachment-side valve stem 25 is disposed on the body-side valve stem 14, the ring-shaped packing 22 is also disposed on the nozzle holder 12, and the nozzle head 19 is attached on them. The nozzle holder 12 and the nozzle head 19 are fixed by connecting using, for example, a key portion which is disposed on one of the outer circumferential surface of the nozzle holder 12 and the inner circumferential surface of the nozzle head 19 and a key groove which is disposed on the other.

For example, a key portion 26 is formed to protrude on the inner circumferential surface of the base section 20 of the nozzle head 19. Meanwhile, a key groove 27 is formed in the outer circumferential surface of the nozzle holder 12. To attach the nozzle head 19 to the nozzle holder 12, the key portion 26 of the nozzle head 19 is engaged with the key groove 27 of the nozzle holder 12. Since the key groove 27 has, for example, an L shape, the key portion 26 is engaged along the key groove 27, and the nozzle head 19 is fixed by connection to the nozzle holder 12. Since the key portion 26 and the key groove 27 have a paired shape, they can be used as identification means for identifying a combination of the nozzle holder 12 and the nozzle head 19.

To connect the nozzle holder 12 and the nozzle head 19, undercut fitting may be applied as shown in Fig. 4. Specifically, a cut portion 12a is formed in the outer circumferential surface of the nozzle holder 12. A projection 19a corresponding to the cut portion 12a is formed on the inner circumferential surface of the nozzle head 19. The nozzle holder 12 and the nozzle head 19 are connected and fixed by fitting the projection 19a into the cut portion 12a. The cut portion 12a and the projection 19a configure a connecting portion based on undercut fitting.

The connecting portion by undercut fitting is rotatable when a force is applied in a twisting direction to the fuel cartridge 6. Therefore, it can be functioned as a separation mechanism of the nozzle attachment 9. Besides, when a force is applied in a bending direction to the nozzle attachment 9, the nozzle attachment 9 can be separated from the nozzle section 8 by deforming undercut fitting (at least one of the cut portion 12a and the projection 19a).

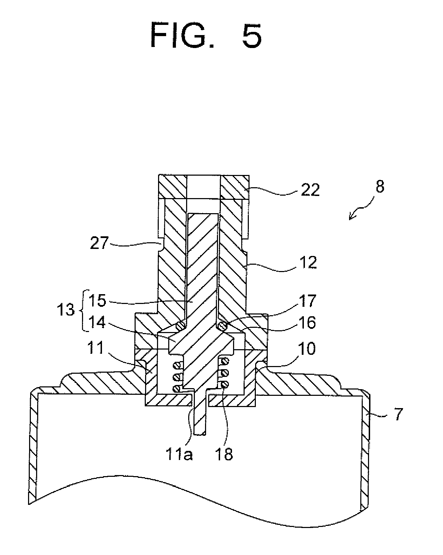

The nozzle attachment 9 is removably attached to the nozzle section 8. The nozzle attachment 9 is connected by inserting into the socket section 4 of the fuel cell 1 to connect the fuel cartridge 6 to the fuel cell 1. When a force is applied in a bending or twisting direction to the fuel cartridge 6 connected to the fuel cell 1, only the nozzle attachment 9 is separated from the nozzle section 8 as shown in Fig. 5. Since the valve mechanism configured of the valve body 13 and the like is housed in the nozzle section 8 on the cartridge body 7 side, the function of the valve mechanism is maintained as it is even if the nozzle attachment 9 is separated from the nozzle section 8.

Thus, when a force of bending or twisting is applied to the fuel cartridge 6 connected to the fuel cell 1, the nozzle attachment 9 is separated from the nozzle section 8, so that the function of the valve mechanism housed in the nozzle section 8 can be maintained. Besides, when the nozzle attachment 9 is separated from the nozzle section 8, the force (force of opening the valve) applied to the valve body 13 via the attachment-side valve stem 25 is removed, so that the valve head 14 of the valve body 13 returns immediately to the closed state. Thus, the liquid fuel can be suppressed from leaking or the like when the force of bending or twisting is applied to the fuel cartridge 6.

The nozzle attachment 9 separated from the nozzle section 8 may be remained in a state connected to the socket section 4 of the fuel cell 1. When the nozzle attachment 9 is remained connected to the socket section 4, the liquid fuel cannot be reinjected into the fuel cell 1. Therefore, a pull-out projection 28 is formed on the outer circumferential surface of the nozzle attachment 9. When the pull-out projection 28 is held and pulled, the nozzle attachment 9 can be removed from the socket section 4 against the holding force of the socket section 4 side.

When a force of bending, twisting or the like is applied to the fuel cartridge 6 to deform, for example, the key groove 27 of the nozzle holder 12, the nozzle attachment 9 can be easily separated from the nozzle section 8. For plastic deformation of, for example, the key groove 27, it is preferable that the nozzle holder 12 is made of a soft material such as a soft resin or the like, and the nozzle head 19 is made of a hard material such as a metal material, a hard resin or the like. Thus, the key groove 27 of the nozzle holder 12 is plastically deformed easily when the force of bending or twisting is applied to the fuel cartridge 6, so that the key portion 26 of the nozzle head 19 can be separated easily from the key groove 27.

As the soft resin forming the nozzle holder 12, there are, for example, low-density polyethylene (LDPE), high-density polyethylene (HDPE), linear low-density polyethylene (LLDPE), crosslinked high-density polyethylene (XLPE), high molecular weight polyethylene (HMWPE), ultra high molecular weight polyethylene (UHMWPE), polypropylene (PP), and polypropylene copolymer (PPCO). Meanwhile, as the metal material forming the nozzle head 19, a general SUS material or the like can be used. As the hard resin, there are super engineering plastic materials such as polyether ether ketone (PEEK), polyphenylene sulfide (PPS), a liquid crystal polymer (LCP), polybutylene terephthalate (PBT), polyethylene terephthalate (PET), polyacetal (POM).

Since the nozzle head 19 is contacted to the liquid fuel such as a methanol fuel, it is preferable that the nozzle head 19 which is made of a metal material, a super-engineering plastic material or the like is undergone a surface treatment for improvement of corrosion resistance and provision of low elution. Surface treatments applicable to the nozzle head 19 include a passivation treatment, plating with a noble metal such as gold, platinum or the like, fluorine resin coating, graphite coating, silicone coating and the like. For the soft resin forming the nozzle holder 12, it is desirable to use a resin material having fuel resistance such as methanol resistance. All the above soft resins are excellent in methanol resistance.

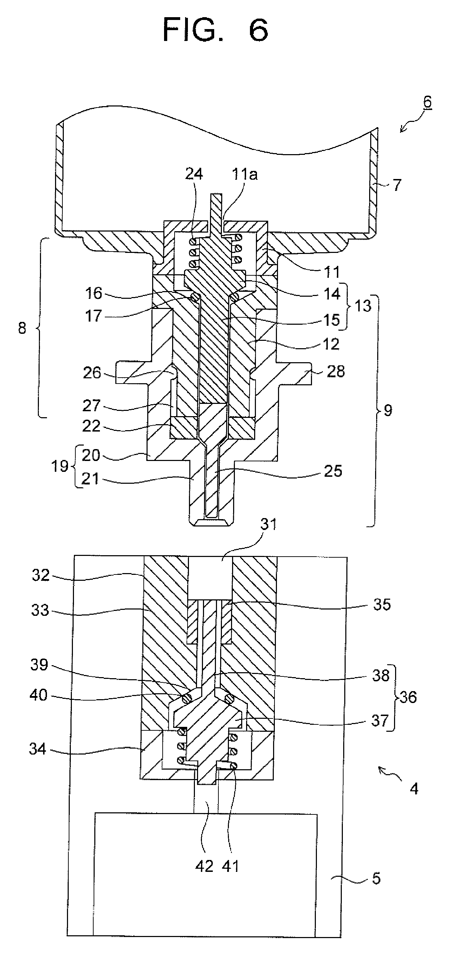

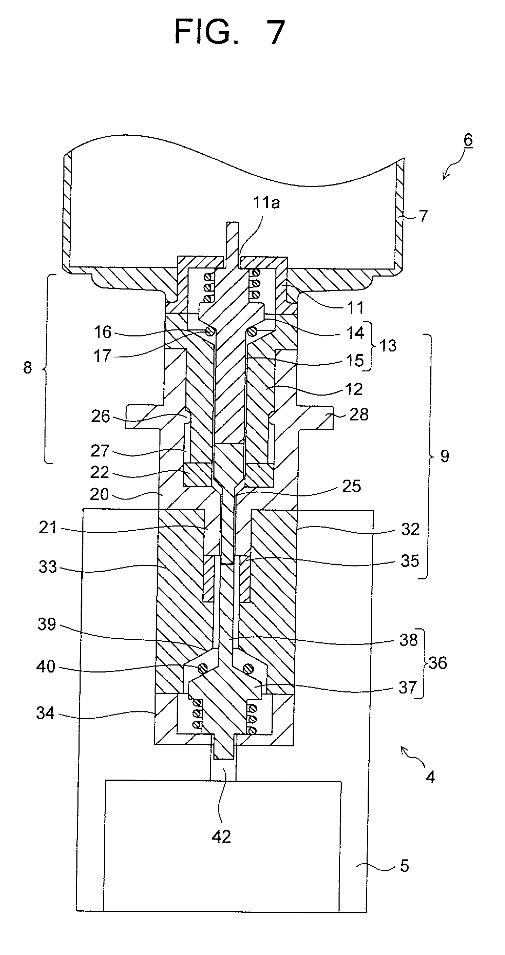

The connection structure and connection mechanism of the nozzle section 8 and the nozzle attachment 9 of the above-described fuel cartridge 6 with the socket section 4 of the fuel cell 1 are described below with reference to Fig. 6 and Fig. 7. Fig. 6 shows a state before the nozzle section 8 and the nozzle attachment 9 of the fuel cartridge 6 are connected to the socket section 4 of the fuel cell 1, and Fig. 7 shows a state that they are connected. The structures of the nozzle section 8 and the nozzle attachment 9 of the fuel cartridge 6 are as described above.

Meanwhile, the socket section 4 as a connection mechanism on the fuel cell 1 side is provided with a socket body 32 having a nozzle insertion port 31. The socket body 32 has a substantially cylindrical upper body portion 33 and a cup-like lower body portion 34. A rubber holder 35 is disposed as an elastic holder within the upper body portion 33 of the socket body 32. The rubber holder 35 is a sealing member which seals the nozzle inserting portion 21 of the nozzle head 19, and its inside forms a passage for the liquid fuel. The rubber holder 35 is a sealing member for sealing between the outside and the liquid fuel passage when the valve mechanism of the socket section 4 is opened.

A valve 36 is disposed within the socket body 32. The valve 36 is provided with a valve head 37 and a valve stem 38. The valve head 37 is disposed within the valve chamber which is defined by the upper body portion 33 and the lower body portion 34. The valve stem 38 is housed in the hollow portion of the upper body portion 33 and in the rubber holder 35. This valve 36 is movable back and forth in the axial direction. An O-ring 40 is disposed between the valve head 37 and a valve seat 39 which is formed on the under surface of the upper body portion 33.

A force for pressing the valve head 37 to the valve seat 39 by an elastic body such as a compression spring 41 or the like is always applied to the valve 36 to press the O-ring 40. When the fuel cartridge 6 is separated from the fuel cell 1, the O-ring 40 is pressed to the valve seat 39 via the valve head 37. Thus, the liquid fuel passage in the socket section 4 is put in a closed state. When the fuel cartridge 6 is connected to the fuel cell 1, the valve stem 38 retracts to separate the valve head 37 from the valve seat 39, and the fuel passage in the socket section 4 is put in an open state.

The lower body portion 34 of the socket body 32 is provided with a communication hole 42 which is connected to the fuel storing section 3 through the fuel supply portion 5. Thus, the socket section 4 has the fuel passage within the socket body 32 connected to the fuel storing section 3 through the communication hole 42 formed in the lower body portion 34. Then, the valves 13, 36 are put in an open state to open the fuel passages in the nozzle section 8 and the socket section 4 to enable to inject the liquid fuel stored in the fuel cartridge 6 into the fuel storing section 3 through the nozzle section 8 and the socket section 4.

To supply the liquid fuel stored in the fuel cartridge 6 to the fuel storing section 3 of the fuel cell 1, the nozzle attachment 9 of the fuel cartridge 6 is connected by inserting into the socket section 4. As shown in Fig. 7, when the nozzle attachment 9 is inserted into the socket section 4, the tip end of the nozzle inserting portion 21 comes into contact with the tip end of the rubber holder 35 to seal the periphery of the liquid fuel passage before the valves 13, 36 are put in an open state.

A mechanical key 29 is desirably formed on the nozzle inserting portion 21 of the nozzle attachment 9 as shown in Fig. 4. When the mechanical key 29 is engaged with a key groove (not shown) formed in the socket section 4, improper connection (such as error injection of the liquid fuel) of, for example, the fuel cartridge 6 can be prevented. It is used as fuel identification means. The mechanical key 29 may also be formed on the nozzle holder 12 in addition to the nozzle inserting portion 21 of the nozzle head 19. Thus, the nozzle head 19 and the nozzle holder 12 having a different diameter can be used as inserting portions to the socket section 4. For the socket section 4 having a different inner diameter, the nozzle attachment 9 is removed, and the nozzle holder 12 is used as the inserting portion.

When the tip end of the nozzle inserting portion 21 is in contact with the rubber holder 35 and the nozzle attachment 9 is inserted into the socket section 4, the tip ends of the attachment-side valve stem 25 of the nozzle attachment 9 and the valve stem 38 of the socket section 4 are mutually contacted. When the nozzle attachment 9 is further inserted from the above state, the valve 36 retracts to open the passage in the socket section 4. Then, the valve body 13 of the nozzle section 8 which is disposed in contact with the attachment-side valve stem 25 retracts to open the passage in the nozzle section 8. Thus, the fuel passage of the connecting portion between the nozzle section 8 (including the nozzle attachment 9) and the socket section 4 is established.

Thus, the nozzle section 8 (including the nozzle attachment) and the socket section 4 are connected, and the valve mechanisms housed in them are put in an open state to open the liquid fuel passage. Thus, the liquid fuel stored in the fuel cartridge 6 is supplied to the fuel storing section 3 of the fuel cell 1. To enhance reliability and the like in the state that the fuel cartridge 6 is connected to the fuel cell 1, it is important to separate the fuel cartridge 6 without breaking the valve mechanism on the fuel cartridge 6 side against the force of bending, twisting or the like applied to the fuel cartridge 6.

In connection with the above, when the nozzle attachment 9 is separated from the nozzle section 8 as described above, the fuel cartridge 6 of this embodiment maintains the function of the valve mechanism housed in the nozzle section 8. Besides, when the nozzle attachment 9 is separated from the nozzle section 8, the valve mechanism housed in the nozzle section 8 returns immediately to the closed state. Thus, even if a force of bending, twisting or the like is applied to the fuel cartridge 6, the function of the valve mechanism is maintained, and the fuel passage in the nozzle section 8 is established to have a closed state. And, it becomes possible to prevent the liquid fuel from leaking from the fuel cartridge 6.

It is desirable that for example, fuel identification means based on a combination of the key portion and the key groove is applied to the nozzle attachment 9 and the socket body 32. Error injection or the like of the liquid fuel can be prevented by forming the key portion and the key groove having a paired shape for the liquid fuel on the nozzle attachment 9 and the socket body 32. Besides, the nozzle holding mechanism based on the combination of an elastic member such as an elastic projection, an elastic pin or the like and a groove engaging with it can be applied to the nozzle attachment 9 and the socket body 32. Thus, connection reliability of the fuel cartridge 6 to the fuel cell 1 can be enhanced.

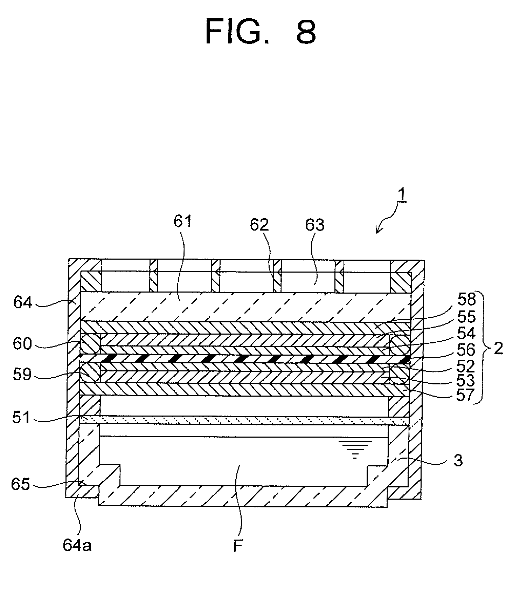

A specific structure of the power generation section 2 in the fuel cell 1 of the above-described embodiment is described below. The fuel cell 1 is not limited to a particular type, and there can be applied, for example, a passive or active type DMFC, to which a satellite type fuel cartridge 6 is connected as required. An embodiment that the internal vaporization type DMFC is applied to the fuel cell 1 is described below with reference to Fig. 8. In addition to the power generation section 2 and the fuel storing section 3, the internal vaporization type (passive type) DMFC 1 shown in Fig. 8 is further provided with a gas-liquid separation layer 51 which is interposed between them.

The power generation section 2 is provided with a membrane electrode assembly (MEA) which is composed of an anode (fuel electrode) having an anode catalyst layer 52 and an anode gas diffusion layer 53, a cathode (oxidant electrode/air electrode) having a cathode catalyst layer 54 and a cathode gas diffusion layer 55, and a proton (hydrogen ion) conductive electrolyte membrane 56 sandwiched between the anode and the cathode catalyst layers 52, 54.

Examples of the catalyst contained in the anode catalyst layer 52 and the cathode catalyst layer 54 include a single element of platinum group elements such as Pt, Ru, Rh, Ir, Os, Pd, etc., an alloy containing a platinum group element, and the like. For the anode catalyst layer 52, it is preferable to use Pt-Ru, Pt-Mo or the like which has high resistance to methanol and carbon monoxide. It is preferable to use Pt, Pt-Ni or the like for the cathode catalyst layer 54. The catalyst is a supported catalyst using a conductive carrier such as carbon material or an unsupported catalyst.

Examples of the proton conductive material configuring the electrolyte membrane 56 include a fluorine-based resin such as a perfluorosulfonic acid polymer having a sulfonic group, a hydrocarbon-based resin having the sulfonic group, an inorganic substance such as tungstic acid or phosphotungstic acid, and the like. Examples of the fluorine-based resin having a sulfonic group include Nafion (trade name, a product of DuPont), Flemion (trade name, a product of Asahi Glass Co., Ltd.) and the like. But, they are not used exclusively.

The anode gas diffusion layer 53 superposed on the anode catalyst layer 52 serves to uniformly supply the fuel to the anode catalyst layer 52 and also has a power collecting function of the anode catalyst layer 52. The cathode gas diffusion layer 55 superposed on the cathode catalyst layer 54 serves to uniformly supply an oxidant to the cathode catalyst layer 54 and also has a power collecting function of the cathode catalyst layer 54. An anode conductive layer 57 is superposed as a power collector on the anode gas diffusion layer 53. A cathode conductive layer 58 is superposed as a power collector on the cathode gas diffusion layer 55.

The anode conductive layer 57 and the cathode conductive layer 58 are configured of, for example, a mesh, a porous film, a thin film or the like which is formed of a conductive metal material such as Au. Besides, rubber O-rings 59, 60 are interposed between the electrolyte membrane 56 and the anode conductive layer 57 and between the electrolyte membrane 56 and the cathode conductive layer 58, respectively. They prevent the fuel and the oxidant from leaking from the power generation section 2.

A methanol fuel is filled as a liquid fuel F in the fuel storing section 3. The fuel storing section 3 has an opening on the side of the power generation section 2 and the gas-liquid separation layer 51 disposed between the opening portion of the fuel storing section 3 and the power generation section 2. The gas-liquid separation layer 51 is a film which allows the passage of only the vaporized component of the liquid fuel F but does not allow the passage of the liquid component. The component materials of the gas-liquid separation layer 51 include, for example, a fluorine resin such as polytetrafluoroethylene. The vaporized component of the liquid fuel F means a gas mixture which consists of a vaporized component of methanol and a vaporized component of water when the aqueous methanol solution is used as the liquid fuel F, and a vaporized component of methanol when pure methanol is used.

A moisture retaining layer 61 is superposed on the cathode conductive layer 58, and a surface layer 62 is further superposed on it. The surface layer 62 has a function to adjust an introduced volume of oxidant air. The introduced volume of air is adjusted by the quantity and size of air introduction ports 63 formed in the surface layer 62. The moisture retaining layer 61 serves to suppress water evaporation by partial impregnation of water generated by the cathode catalyst layer 54 and also has a function to promote uniform diffusion of the oxidant to the cathode catalyst layer 54 by uniform introduction of the oxidant into the cathode gas diffusion layer 55. The moisture retaining layer 61 is formed of a member having a porous structure, such as a porous body of polyethylene or polypropylene.

The gas-liquid separation layer 51, the power generation section 2, the moisture retaining layer 61 and the surface layer 62 are sequentially stacked on the fuel storing section 3, and they are entirely covered with a stainless steel cover 64 to configure the passive type DMFC 1. The cover 64 has openings formed at portions corresponding to the air introduction ports 63 which are formed in the surface layer 62. The fuel storing section 3 is provided with a terrace 65 for receiving fixture portions 64a of the cover 64, and the terrace 65 is caught by caulking the fixture portions 64a to entirely hold the DMFC 1 by the cover 64. It is not shown in Fig. 8, but the fuel receiving portion 5 having the socket section 4 is provided on the under surface of the fuel storing section 3 as shown in Fig. 1.

According to the passive type DMFC (fuel cell) 1 having the structure described above, the liquid fuel F (e.g., the aqueous methanol solution) in the fuel storing section 3 is vaporized, and the vaporized component is supplied to the power generation section 2 through the gas-liquid separation layer 51. In the power generation section 2, the vaporized component of the liquid fuel F is diffused by the anode gas diffusion layer 53 and supplied to the anode catalyst layer 52. The vaporized component supplied to the anode catalyst layer 52 causes an internal reforming reaction of methanol expressed by the following formula (1).

CH₃OH + H₂O → CO₂ + 6H⁺ + 6e⁻ (1)

When pure methanol is used as the liquid fuel F, steam is not supplied from the fuel storing section 3, so that water produced by the cathode catalyst layer 54 and water in the electrolyte membrane 56 are reacted with methanol to cause the internal reforming reaction expressed by the formula (1). Otherwise, an internal reforming reaction is caused by another reaction mechanism not requiring water without depending on the above-described internal reforming reaction of the formula (1).

Proton (H⁺) produced by the internal reforming reaction reaches the cathode catalyst layer 54 through the electrolyte membrane 56. Air (oxidant) introduced through the air introduction ports 63 of the surface layer 62 is diffused into the moisture retaining layer 61, the cathode conductive layer 58 and the cathode gas diffusion layer 55 and supplied to the cathode catalyst layer 54. The air supplied to the cathode catalyst layer 54 causes the reaction expressed by the following formula (2). This reaction causes a power generation reaction involving the generation of water.

(3/2)O₂ + 6H⁺ + 6e⁻ → 3H₂O (2)

With the progress of the power generation reaction based on the above-described reaction, the liquid fuel F (e.g., an aqueous methanol solution or pure methanol) in the fuel storing section 3 is consumed. Since the power generation reaction stops when the liquid fuel F in the fuel storing section 3 is exhausted, the liquid fuel is supplied from the fuel cartridge 6 into the fuel storing section 3 at that time or before that. The liquid fuel is supplied from the fuel cartridge 6 with the nozzle 8 (including the nozzle attachment 9) of the fuel cartridge 6 connected to the socket section 4 of the fuel cell 1 by inserting into it as described above.

The fuel cartridge of the invention is not limited to any mechanism if it is applied to the fuel cell. The fuel cell applying the fuel cartridge of the invention is not limited to any method, mechanism or the like if the liquid fuel is supplied by means of the fuel cartridge. The specific structure of the fuel cell can also be materialized within the scope of technical idea of the present invention. Besides, various modifications such as an appropriate combination of the plural component elements described in the above embodiments, deletion of some component elements from the whole component elements shown in the embodiments, or the like can be made. The embodiments of the present invention can be expanded or modified within the scope of technical idea of the present invention, and the expanded and modified embodiments are also included in the technical scope of the invention.

### Industrial Applicability

A fuel cartridge for a fuel cell according to an embodiment of the present invention maintains the function of the valve mechanism housed in the nozzle section because the nozzle attachment is separated from the nozzle section if a force of bending, twisting or the like is applied to the fuel cartridge connected to the fuel cell. Therefore, a defect such as leakage of the liquid fuel due to damage of the valve mechanism can be suppressed from occurring. Such a type of fuel cartridge is excellent in reliability and safety, and therefore can be used effectively for the fuel cell used as a power source, a charger or the like for various types of devices.

## Claims

1. A fuel cartridge for a fuel cell, comprising:
a cartridge body for storing a liquid fuel for the fuel cell;
a nozzle section which is mounted on the cartridge body and has a valve mechanism therein; and
a nozzle attachment which is removably attached to the nozzle section and has a nozzle inserting portion to be connected to the fuel cell.

2. The fuel cartridge for a fuel cell according to claim 1,
wherein the nozzle attachment is separated from the nozzle section when a force in a bending or twisting direction is applied to the fuel cartridge connected to the fuel cell.

3. The fuel cartridge for a fuel cell according to claim 1,
wherein the nozzle section is provided with a nozzle holder mounted on the cartridge body, a valve body which is disposed within the nozzle holder and has a valve head and a body-side valve stem, and an elastic member which presses the valve head to a valve seat disposed within the nozzle holder to keep a passage of the liquid fuel in the nozzle section in a closed state.

4. The fuel cartridge for a fuel cell according to claim 3,
wherein the body-side valve stem is disposed to position its tip end within the nozzle holder.

5. The fuel cartridge for a fuel cell according to claim 3,
wherein the nozzle holder is provided with a mechanical key.

6. The fuel cartridge for a fuel cell according to claim 3,
wherein the nozzle attachment is provided with a nozzle head which is removably attached to the exterior of the nozzle holder and has the nozzle inserting portion, and an attachment-side valve stem which is disposed within the nozzle head and placed on the body-side valve stem.

7. The fuel cartridge for a fuel cell according to claim 6,
wherein the nozzle head has a connecting portion which is connected to the nozzle holder by undercut fitting, and the connecting portion is rotatable when a force is applied in a twisting direction to the fuel cartridge.

8. The fuel cartridge for a fuel cell according to claim 7,
wherein the nozzle attachment is separated from the nozzle section by deforming the connecting portion when a force is applied in a bending direction.

9. The fuel cartridge for a fuel cell according to claim 6, further comprising:
a key portion which is formed on one of the outer circumferential surface of the nozzle holder and the inner circumferential surface of the nozzle head; and
a key groove which is formed in the other of the outer circumferential surface of the nozzle holder and the inner circumferential surface of the nozzle head and engaged with the key portion to connect the nozzle holder and the nozzle head.

10. The fuel cartridge for a fuel cell according to claim 9,
wherein the nozzle attachment is separated from the nozzle section by deforming the key groove when a force is applied in a bending or twisting direction to the fuel cartridge connected to the fuel cell.

11. The fuel cartridge for a fuel cell according to claim 10,
wherein the valve mechanism of the nozzle section has a closed state immediately when the key groove is deformed.

12. The fuel cartridge for a fuel cell according to claim 10,
wherein the nozzle head is made of a metal material or a super-engineering plastic material.

13. The fuel cartridge for a fuel cell according to claim 12,
wherein the inside of the nozzle head is undergone a surface treatment.

14. The fuel cartridge for a fuel cell according to claim 6,
wherein at least one of the nozzle attachment and the attachment-side valve stem is provided with a drop preventing mechanism for preventing the attachment-side valve stem from dropping.

15. The fuel cartridge for a fuel cell according to claim 14,
wherein the drop preventing mechanism has a large-diameter portion which is formed on the attachment-side valve stem and larger than the inner diameter of the nozzle inserting portion.

16. The fuel cartridge for a fuel cell according to claim 1,
wherein the nozzle attachment has a pull-out projection which is formed on its outer circumferential surface.

17. The fuel cartridge for a fuel cell according to claim 1,
wherein a mechanical key is formed on the outer surfaces of the nozzle head and the nozzle holder, and the nozzle head and the nozzle holder have a different outside diameter.

18. A nozzle attachment for a fuel cartridge, comprising:
a nozzle head which is attached to a nozzle section of a fuel cartridge for a fuel cell;
a nozzle inserting portion which is formed on the tip end of the nozzle head and connected to the fuel cell; and
an attachment-side valve stem which is disposed within the nozzle head,
wherein the attachment is removably attached to the nozzle section of the fuel cartridge.
